# EUROPEAN PATENT APPLICATION

(11) **EP 4 648 470 A1**
(43) Date of publication of application: **12.11.2025**
(21) Application number: 25175302.6
(22) Date of filing: 09.05.2025
(51) Int. Cl.: H04W 24/10, H04B 17/391, H04W 36/30, G06N 3/08

(54) **METHOD AND DEVICE FOR PREDICTING OCCURRENCE OF RLF IN UE**

(30) Priority: 10.05.2024 KR 20240062113; 17.04.2025 KR 20250049915
(71) Applicant: KT Corporation, Seongnam-si, Gyeonggi-do 13606 (KR)
(72) Inventor: KIM, Han Jun, 13606 Seongnam-si (KR); PARK, Kyu Jin, 13606 Seongnam-si (KR); LEE, Eun Jong, 13606 Seongnam-si (KR)
(74) Representative: Santarelli

(57) **Abstract**

Provided are a method and device for proactively predicting a radio link failure (RLF) of a UE. The method may include receiving configuration information for RLF prediction from a base station, performing signal measurement of a serving cell based on the configuration information, and predicting an RLF occurrence using an RLF output result output from a preconfigured prediction model by inputting a signal measurement result to the prediction model.

## Description

### CROSS REFERENCE TO RELATED APPLICATION

This application claims priority from Korean Patent Application Nos. 10-2024-0062113, filed on May 10, 2024, and 10-2025-0049915, filed on April 17, 2025, which are hereby incorporated by reference for all purposes as if fully set forth herein.

### BACKGROUND

### Field

The disclosure relates to a technology for predicting the occurrence of a radio link failure (RLF) in a UE.

### Description of Related Art

With the widespread adoption of wireless communication devices, a large number of base station cells are being deployed to accommodate high subscriber volumes and extend coverage to smaller areas. Accordingly, mobility support has become a critical aspect of wireless communication devices.

As a wireless communication device moves and thus the cell is changed, wireless communication continues providing service to the user through a handover procedure.

However, the handover process requires a handover signal transmission and reception procedure between multiple UEs and base stations. In environments where microcells are densely deployed and UE mobility is high, typical handover procedures may lead to various issues. For example, problems such as handover failures, radio link failures, ping-pong effects, and throughput losses may occur during the handover process.

To address these problems, various handover technologies, such as conditional handover and L1/L2 triggered mobility (LTM), have been introduced.

Such handover technologies are also reactive approaches, where handover is determined based on measurement events, results, and reporting information. As a result, challenges remain in enhancing handover robustness and minimizing service interruption.

In particular, unexpected handover failures or resulting radio link failures (RLF) may cause significant inconvenience to users, leading to the need for technologies that may more effectively handle such situations.

### BRIEF SUMMARY

The disclosure provides a technology for predicting the occurrence of a radio link failure (RLF) in a UE.

In an aspect, the disclosure may provide a method for predicting a radio link failure (RLF) by a user equipment (UE). The method may include receiving configuration information for RLF prediction from a base station, performing signal measurement of a serving cell based on the configuration information, and predicting an RLF occurrence using an RLF output result output from a preconfigured prediction model by inputting a signal measurement result to the prediction model.

In another aspect, the disclosure may provide a method for controlling radio link failure (RLF) prediction of a UE by a base station. The method may include transmitting configuration information for RLF prediction of the UE to the UE, and receiving an RLF prediction report transmitted according to an RLF output result output from a preconfigured prediction model by measuring a signal of a serving cell using the configuration information by the UE and inputting a signal measurement result to the prediction model.

In another aspect, the disclosure may provide a UE predicting a radio link failure (RLF). The UE may include a receiver receiving configuration information for RLF prediction from a base station, and a controller performing signal measurement of a serving cell based on the configuration information and predicting an RLF occurrence using an RLF output result output from a preconfigured prediction model by inputting a signal measurement result to the prediction model.

In another aspect, the disclosure may provide a base station controlling radio link failure (RLF) prediction of a UE. The base station may include a transmitter transmitting configuration information for RLF prediction of the UE to the UE, and a receiver receiving an RLF prediction report transmitted according to an RLF output result output from a preconfigured prediction model by measuring a signal of a serving cell using the configuration information by the UE and inputting a signal measurement result to the prediction model.

The disclosure may provide a technology for predicting the occurrence of an RLF in a UE.

### DESCRIPTION OF DRAWINGS

The above and other objects, features, and advantages of the present disclosure will be more clearly understood from the following detailed description, taken in conjunction with the accompanying drawings, in which:
FIG. 1 is a view schematically illustrating an NR wireless communication system in accordance with embodiments of the disclosure;
FIG. 2 is a view schematically illustrating a frame structure in an NR system in accordance with embodiments of the disclosure.
FIG. 3 is a view for explaining resource grids supported by a radio access technology in accordance with embodiments of the disclosure;
FIG. 4 is a view for explaining bandwidth parts supported by a radio access technology in accordance with embodiments of the disclosure;
FIG. 5 is a view illustrating an example of a synchronization signal block in a radio access technology in accordance with embodiments of the disclosure;
FIG. 6 is a signal diagram for explaining a random access procedure in a radio access technology in accordance with embodiments of the disclosure;
FIG. 7 is a view for explaining CORESET;
FIG. 8 is a signal diagram illustrating an RLF detection and declaration operation according to expiration of a timer;
FIG. 9 is a flowchart illustrating operations of a UE according to an embodiment;
FIG. 10 is a flowchart for describing operations of a base station according to an embodiment;
FIG. 11 is a flowchart illustrating an RLF prediction operation according to an embodiment;
FIG. 12 is a signal diagram illustrating an RLF prediction operation according to an embodiment;
FIG. 13 is a view for describing a configuration of a UE according to an embodiment.
FIG. 14 is a view for describing a configuration of a base station according to an embodiment.

### DETAILED DESCRIPTION

Hereinafter, some embodiments of the disclosure will be described in detail with reference to the accompanying illustrative drawings. In the drawings, like reference numerals are used to denote like elements throughout the drawings, even if they are shown on different drawings. Further, in the following description of the disclosure, a detailed description of known functions and configurations incorporated herein will be omitted when it may make the subject matter of the disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

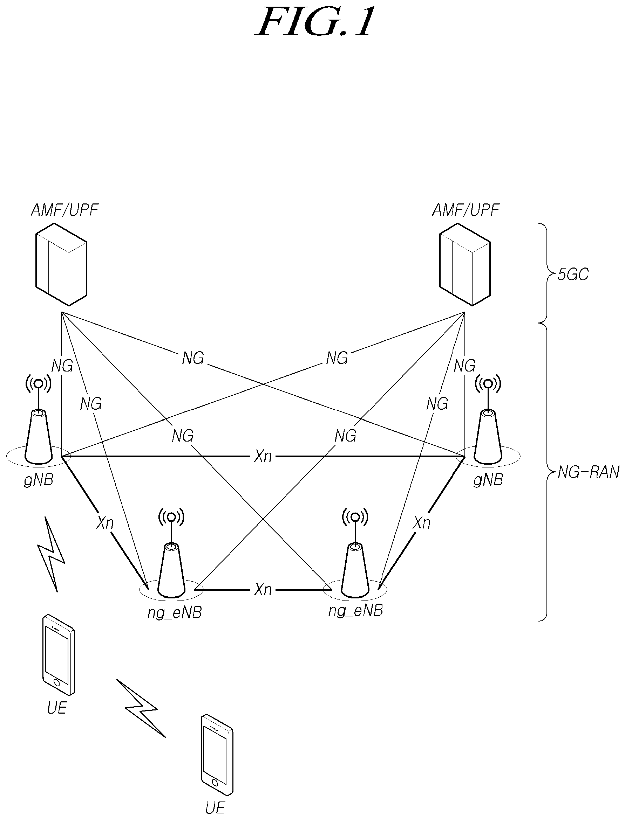

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

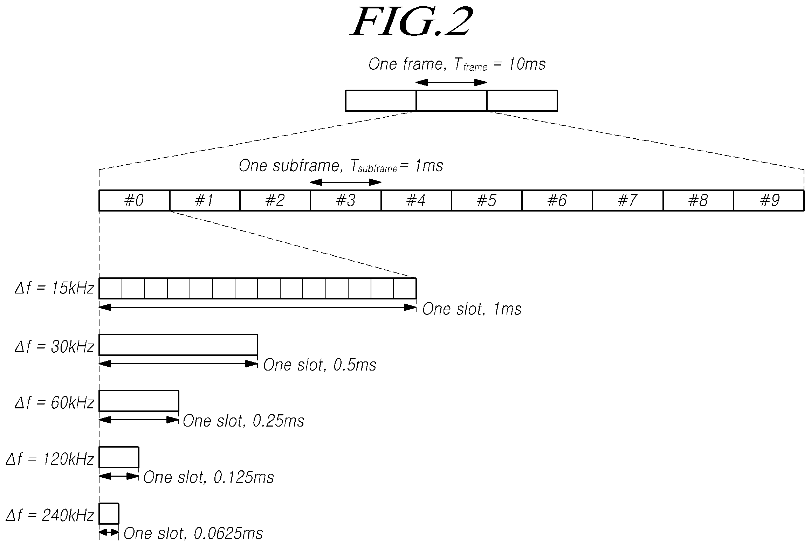

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

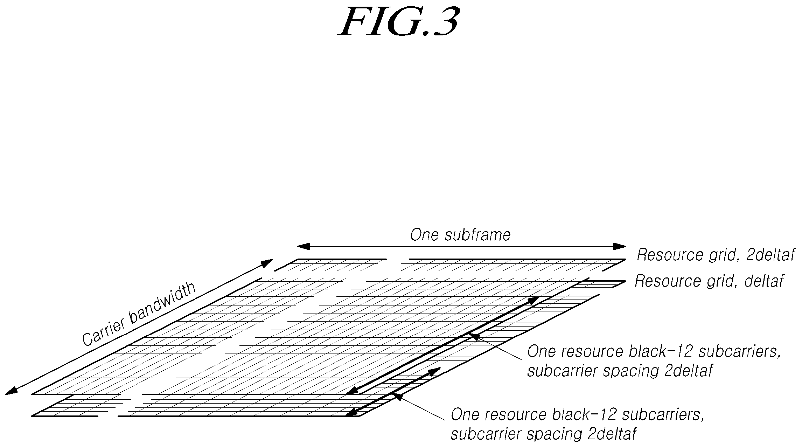

FIG. 3 illustrates resource grids supported by a radio access technology in accordance with embodiments of the disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

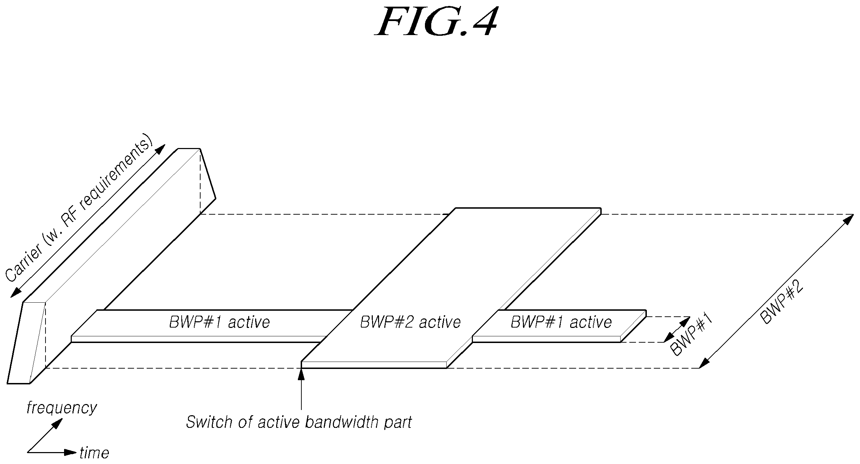

FIG. 4 illustrates bandwidth parts supported by a radio access technology in accordance with embodiments of the disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

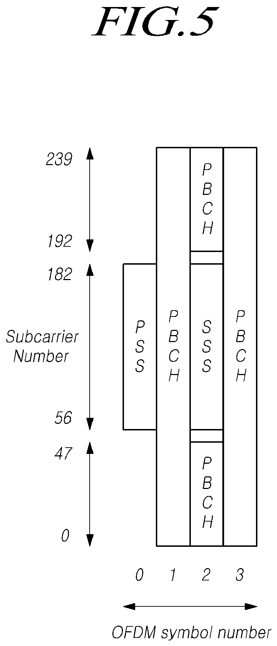

FIG. 5 illustrates an example of a synchronization signal block in a radio access technology in accordance with embodiments of the disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

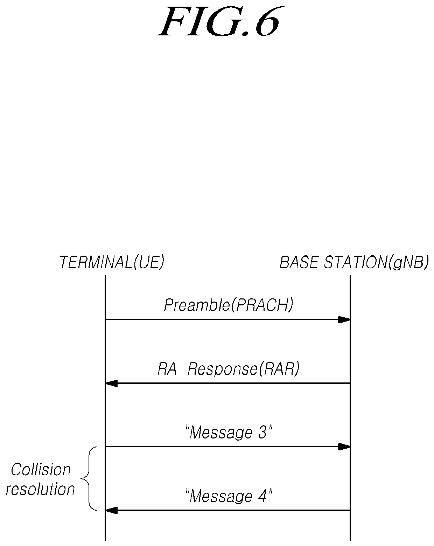

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

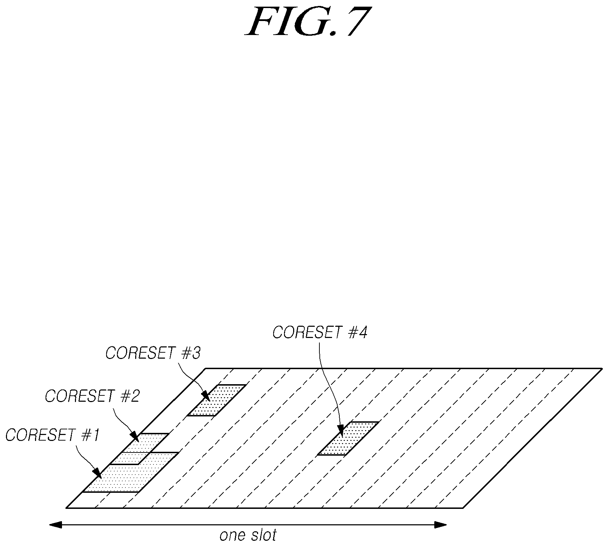

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as having meanings used in the past, present, or potentially in the future.

The handover technology is an important technology for supporting the mobility of the UE.

To support the handover technology, the UE measures the RSRP/RSRQ/SINR of a specific signal based on the measurement configuration and measurement event information configured through RRC signaling from the base station. The UE reports the measurement result to the base station. The base station reviews the report of the UE and determines whether to perform handover of the UE. However, in the typical handover technology, there is a problem in that excessive delay occurs due to multiple signal transmission and reception operations.

In order to mitigate problems such as excessive delay in the typical handover process, research on the layer 3-based handover mechanism has continued. Layer 3-based handover technology is a reactive method that is triggered and performed based on records of measurement results measured by the UE and measurement events configured by the base station. Such handover technology works well when the mobility of the UE is low in a macro cell, but may be a problem when the mobility of the UE is high in an environment where microcells are densely deployed. These reactive mechanisms may lead to unintended problems such as handover failure, radio link failure, ping-pong effect, throughput loss, or too early or late handover timings.

To enhance handover robustness, conditional handover technology and L1/L2 layer triggered mobility (LTM) handover technology have been introduced to reduce handover interruption time that frequently occurs in small cell environments. However, the two mechanisms are also reactive approaches in which handovers are determined based on measurement event, result, and reporting information. Therefore, these mechanisms are insufficient in terms of handover robustness and minimizing service interruption.

Meanwhile, extensive research is being conducted on physical layer-oriented use cases, including spatial and temporal beam prediction, in relation to AML. The main functions of the serving cell's temporal beam prediction are to discover the best beam in the time domain, discover the top K beams, or predict a beam pair to enhance UE throughput. Predicting the best beam, top K beams, or a beam pair from a reduced number of measured beam sets compared to typical methods may help reduce the signaling overhead of the reference signal, measurement efforts, and UE power consumption.

Further, layer 1 beam measurement may be extended from the serving cell to the neighboring cell, thereby reusing related measurement values to contribute to mobility enhancement. Since L3 measurement is derived by filtering L1 measurement values, AI/ML for air interface research may be utilized and contribute to enhancing mobility.

From the RAN 3 point of view, research is being conducted to enhance AI/ML-based mobility. For example, in order to predict the UE's trajectory and the expected candidate movement path in a single hop, a method has been discussed that may utilize information such as the time the UE stayed in the cell or the record of handover between cells. In Rel-19, RAN3 will perform additional work for the trajectory prediction of the UE in multiple hop scenarios. As a result, the predicted UE trajectory information will help extend AI/ML-based mobility enhancement functions.

Based on the progress and assumptions about the UE trajectory discussed in RAN1 and RAN3 so far, it is possible to predict the candidate target cell to which the UE will finally hand over by predicting the RRM measurement and/or event on the UE side. Further, if necessary, the network side may predict RRM measurements, events, and candidate target cells using auxiliary information and statistical information based on measurement reports of the UE and/or neighboring nodes. If some prediction information is available to the network, handover and/or RRM performance may be enhanced through better decisions (handover or event triggering based measurement report decision) or proactive measures to avoid unintended events.

Meanwhile, one of the main enhancement factors that may contribute to the enhancement of the mobility of the UE is the ability to detect the occurrence of a radio link failure (RLF). This is because the faster the UE or network accurately determines the RLF and performs the recovery operation, the more seamlessly the service may be used from the user's point of view.

Whether an RLF occurs is determined according to whether a problem occurs in the physical layer of the UE. The causes of RLF occurrence are as follows, and the UE detects and declares an RLF for the following reasons.
① t310-Expiry: Timer expiration due to 'out-of-sync' (radio link out-of-synchronization) between UE and base station
② randomAccessProblem: When the maximum number of preamble transmissions is reached through uplink, and a random access problem indication is received from the master cell group (MCG) MAC
③ beamFailureRecoveryFailure: If a random access procedure for beam failure recovery fails, and a corresponding random access problem indication is received from master cell group MAC (MCG MAC)
④ rlc-MaxNumRetx: The maximum number of radio link control (RLC) retransmissions has been reached

In order to determine whether an RLF occurs, the UE may measure RSRP, RSRQ, and SINR of the reference signal transmitted by the base station and compare it with a preset threshold from the base station to determine whether an RLF occurs. A process of determining whether an RLF occurs is referred to as radio link monitoring (RLM), and RLF is determined based on RLM procedure.

In other words, in order for the UE to determine the RLF, the UE needs to perform the RLM operation. The UE calculates RSRP, RSRQ, and SINR measurement values by measuring synchronization signal /physical broadcast channel (SS/PBCH) block and/or channel state information reference signal (CSI-RS) signals at the physical layer of the UE according to *rsType* through RLM-related configuration information received from the base station.

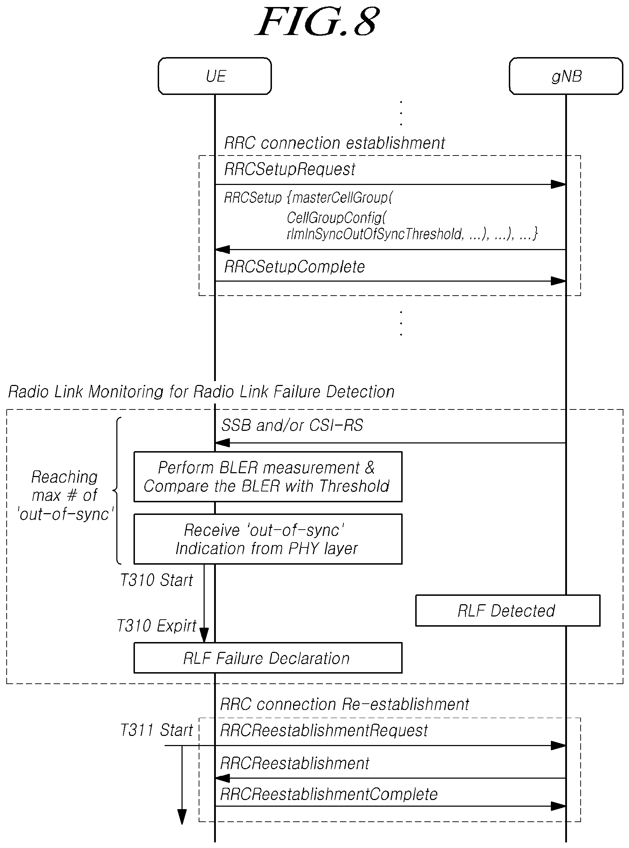

FIG. 8 is a signal diagram illustrating an RLF detection and declaration operation based on timer expiration in the related art.

Referring to FIG. 8, the terminal may download necessary information including timers related to RLF, RLM, and beam failure recovery-related timers t310, t311, t312, t304, ..., counters n310, n311, ..., and threshold through the information element (IE) and parameters 'servingCellConfigCommon', 'masterCellGroup', 'CellGroupConfig', 'SpCellConfig', 'RLF-TimerAndConstants', 'ReconfigurationWithSync', 'rlmInSyncOutOfSyncThreshold', etc., contained within the RRC messages (SIB1, RRCSetup, RRCReconfiguration, RRCResume) from the base station.

As a representative example of the RLF cause, when the 'out-of-synchronization' t310 timer expires, the PHY layer of the UE transmits an 'out-of-sync' indication to the RRC layer, which is the upper layer, if the SSB or CSI-RS measurement value is lower than the threshold (BLERout, Qout) during the RLM process. In this case, the RRC layer may increase n310 according to the number of received 'out-of-sync' indications, and when n310 reaches a predetermined maximum number, timer t310 starts. During the timer t310 period, when the SSB or CSI-RS measurement value is higher than the threshold (BELRin, Qin), the PHY layer of the UE transmits an 'in-sync' indication to the RRC layer, and the counter n311 increases. Here, if n311, which increases according to the number of 'in-sync' indications does not reach the preset maximum number of times before t310 expires, the UE declares the RLF and then performs the RRC connection re-establishment (RRE) procedure. Conversely, when n311 reaches the maximum number of times, the RLF is not declared, the T310 stops, and the connection between the UE and the base station is restored.

| **Timer** | **Start** | **Stop** | **At expiry** |
|---|---|---|---|
| T310 | Upon detecting physical layer problems for the SpCell i.e. upon receiving N310 consecutive out-of-sync indications from lower layers. | Upon receiving N311 consecutive in-sync indications from lowerlayers for the SpCell, upon receiving RRCReconfiguration with *reconfigurationWithSync* for that cell group, upon reception of *MobilityFromNRCommand* upon the reconfiguration of *rlf-TimersAndConstant,* upon initiating the connection re-establishment procedure, upon conditional reconfiguration execution i.e. when applying a stored RRCReconfiguration message induding *roconfigurationWithSync* for that cell group, and upon initiating the MCG failure information procedure. Upon SCG release, if the T310 is kept in SCG. | If the T310 is kept in MCG: If AS security is not activated: go to RRC_IDLE else: initiate the MCG failure information procedure as specified in 5.7.3b or the connection re-establishment procedure as specified in 5.3.7 or the procedure as specified in 5.3.10.3 if any DAPS bearer is configured. |
| | | | If the T310 is kept in SCG, Inform E-UTRAN/NR about the SCG radio link failure by initiating the SCG failure information procedure as specified in 5.7.3. |

| **Counter** | **Reset** | **Incremented** | **When reaching max value** |
|---|---|---|---|
| N310 | Upon reception of "in-sync" indication from lower layers; upon receiving *RRCReconfiguration* with *reconfigurationWithSync* for that cell group; upon initiating the connection re-establishment procedure. | Upon reception of "out-of-sync" from lower layer while the timer T310 is stopped. | Start timer T310 |
| N311 | Upon reception of "out-of-sync" indication from lower layers: upon receiving *RRCReconfiguration* with *reconfigurationWithSync* for that cell group; upon initiating the connection re-establishment procedure. | Upon reception of the "in-sync" from lower layer while the timer T310 is running. | Stop the timer T310. |

The typical RLM operation for RLF determination has the disadvantage of entering the procedure for radio link recovery when the quality of the radio link between the UE and the network deteriorates. In order to overcome these shortcomings, the disclosure provides a technology in which the UE or the network predicts deterioration of wireless link quality through an AI/ML-based RLF prediction operation. Further, the UE may provide a seamless communication service (e.g., seamless connectivity) by requesting the resources necessary for link recovery from the network.

The disclosure proposes a procedure in which a network including a UE or a base station equipped with AI/ML functions proactively predicts RLF based on an AI/ML algorithm to recover the radio link between the UE and the network.

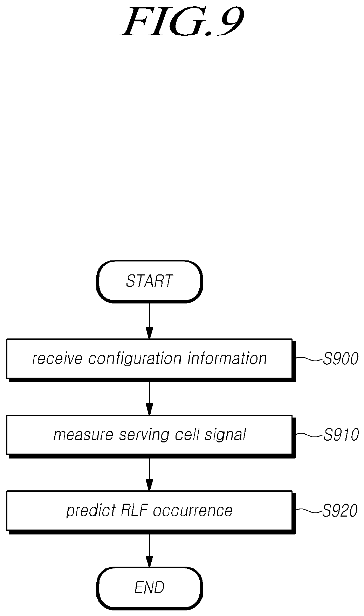

FIG. 9 is a flowchart illustrating operations of a UE according to an embodiment.

Referring to FIG. 9, a method for predicting a radio link failure (RLF) by an UE may include receiving configuration information for RLF prediction from a base station (S900).

According to an embodiment, the UE may receive configuration information including parameters or information for RLF prediction from the base station through higher layer signaling. The higher layer signaling may mean an RRC message.

According to an embodiment, the configuration information may include at least one of time duration information, measurement count information, and measurement period information for signal measurement of a serving cell. The configuration information may have the same meaning as the establishment information (e.g., establishment parameters).

According to an embodiment, the time duration information for signal measurement includes information about the time duration when the UE should measure the downlink signal for RLF prediction. The corresponding time duration information may be included as timer information. Alternatively, the corresponding time duration information may be indicated as start time and duration information. According to another embodiment, the measurement count information may include information about the minimum, specific, or maximum number of times that the UE should measure the downlink signal for RLF prediction. Alternatively, the measurement count information may indicate the number of frames/subframes/slots that the UE should receive or measure. The UE may repeat the measurement operation until the corresponding number of measurements reaches a maximum value. As another example, the measurement period information may include information about the time period when the UE measures the downlink signal for RLF prediction.

Further, the configuration information may include various types of information.

For example, the configuration information may include indication information or configuration parameters for a preconfigured prediction model used by the UE for RLF prediction. Alternatively, the configuration information may include threshold information. For example, the threshold may be a value for determining whether an RLF is present when the output of the AI/ML-based RLF prediction is a radio quality measurement value.

Alternatively, the configuration information may further include information necessary for the UE to transmit the RLF prediction report.

The method for predicting RLF by the UE may include performing signal measurement of the serving cell based on the configuration information (S910).

For example, the UE may measure the signal of the serving cell based on the configuration information. The signal to be measured may be a downlink reference signal. For example, the UE may measure the signal of the synchronization signal block (SSB). Alternatively, the UE may perform signal measurement of the CSI-RS.

The UE may store measurements and measurement records. As described above, the UE performs the measurement operation based on at least one of the measurement period, the time duration, and measurement count information indicated by the configuration information. Whether the measurement target signal of the UE is an SSB or a CSI-RS and resource information about each signal may be included in the configuration information.

For example, the UE performs a measurement operation on the indicated downlink signal in a predetermined time duration. The measurement result may be at least one of RSRP, RSRQ, and SINR.

The method for predicting RLF by the UE may include predicting the occurrence of RLF using an output result from the preconfigured prediction model by inputting the signal measurement result to the prediction model (S920).

According to an embodiment, the UE may measure the signal of the serving cell and input the measurement result into the preconfigured prediction model. The preconfigured prediction model is an artificial intelligence model, which is an AI/ML model. The artificial intelligence model may be indicated by the above-described configuration information or may be pre-configured in the UE. Alternatively, the artificial intelligence model may be configured in the UE by transferring the parameters or the like by the base station.

The input to the artificial intelligence model is the signal measurement result, and at least one value of RSRP, RSRQ, and SINR may be input. The artificial intelligence model may be trained in advance. The training data may be used to predict RLF occurrence at a preset time according to the signal measurement result. The preconfigured prediction model may output RLF prediction result when the above-described value is input.

According to an embodiment, the RLF output result may be a prediction SINR value. When the UE inputs the signal measurement result into the preconfigured prediction model, the prediction SINR value may be output. The prediction SINR value may be a result of predicting an SINR value, which is a signal measurement result in the corresponding serving cell at a future time. Thus, the prediction SINR value is the prediction SINR value at a specific time in the future. Accordingly, a plurality of prediction SINR values may be output at each future time.

The UE may derive a predicted time of occurrence of the RLF in the serving cell based on the prediction SINR value. In other words, the UE may determine that the occurrence of the RLF is predicted when the SINR value is lower than the threshold at a specific time based on the output time-specific prediction SINR value. Accordingly, the UE may further derive not only the RLF occurrence prediction but also the RLF occurrence prediction time.

According to another embodiment, the RLF output result may be an RLF occurrence probability or RLF occurrence prediction information after a preset time. For example, the RLF occurrence probability is a value representing whether an RLF is to occur at a predetermined future time as a probability ranging between 0 and 100%. Further, the RLF occurrence prediction information may be information indicating the possibility of RLF occurrence. For example, the RLF occurrence prediction information may be represented as 0 or 1, where 1 indicates that the occurrence of RLF is predicted, and 0 indicates that the occurrence of RLF is not predicted. Of course, it may be set oppositely.

As described above, the RLF output result may be output as an SINR value, and this may be indicated as an indirect method. When the RLF output result is output as RLF occurrence probability or RLF occurrence prediction information (e.g., a probability or binary prediction indicating RLF occurrence), it may be indicated as a direct method.

Meanwhile, when the RLF output result is output, the UE may predict the occurrence of RLF by comparing it with the threshold included in the configuration information. For example, when the RLF output result is the prediction SINR value, the UE may predict the occurrence of the RLF by comparing the prediction SINR with the threshold. If the prediction SINR value is less than the threshold, it may be determined that the occurrence of RLF is predicted at the prediction time of the corresponding prediction SINR value. Similarly, when the RLF output result is the RLF occurrence probability, the UE may predict the RLF occurrence by comparing the probability value and the threshold.

Alternatively, when the RLF output result is RLF occurrence probability or RLF occurrence prediction information (e.g., a probability or binary prediction indicating RLF occurrence), the UE may predict RLF occurrence based on the corresponding value without comparison with the threshold. In particular, in the case of RLF occurrence prediction information (e.g., binary prediction (e.g., 0 or 1)), a separate threshold comparison operation is unnecessary because it directly predicts and outputs whether it occurs in the prediction model as 0 or 1.

Meanwhile, the UE may transmit the RLF prediction report to the base station based on the result of comparison between the RLF output result and the threshold. For example, when the occurrence of the RLF is predicted, the UE may transmit the RLF prediction report to the base station. Alternatively, even when RLF is not predicted to occur, the UE may transmit the RLF prediction report to the base station when a preset condition is met. Alternatively, the UE may transmit the RLF prediction report to the base station when the RLF output result of the prediction model is output regardless of the RLF occurrence prediction.

The RLF prediction report may include at least one of RLF declaration information, RLF occurrence time or time information, and RLF prediction result. The RLF declaration information may refer to indication information that notifies the base station of a predicted RLF.

Through the reporting operation, the UE may predict the occurrence of an RLF, thereby preventing issues associated with sudden RLF occurrences and preparing for service interruption situations beforehand.

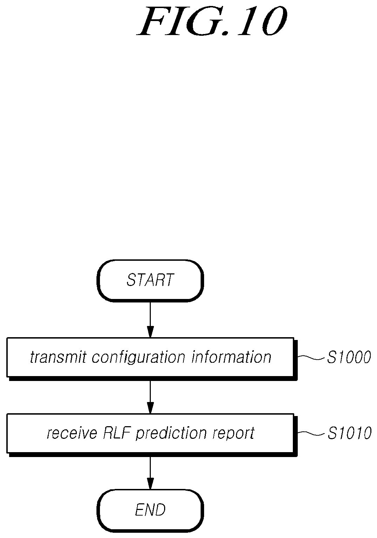

FIG. 10 is a flowchart illustrating operations of a base station according to an embodiment.

Referring to FIG. 10, a method for controlling radio link failure (RLF) prediction of a UE by a base station may include transmitting configuration information for RLF prediction to the UE (S 1000).

According to an embodiment, the configuration information may be transmitted to the UE through higher layer signaling. The higher layer signaling may be an RRC message.

According to an embodiment, the configuration information may include at least one of time duration information, measurement count information, and measurement period information for signal measurement of a serving cell.

According to an embodiment, the time duration information for signal measurement includes information about the time duration when the UE should measure the downlink signal for RLF prediction. The corresponding time duration information may be included as timer information. Alternatively, the corresponding time duration information may be indicated as start time and duration information. According to another embodiment, the measurement count information may include information about the minimum, specific, or maximum number of times that the UE should measure the downlink signal for RLF prediction. Alternatively, the measurement count information may indicate the number of frames/subframes/slots that the UE should receive or measure. The UE may repeat the measurement operation until the corresponding number of measurements reaches a maximum value. According to further another embodiment, the measurement period information may include information about the time period when the UE measures the downlink signal for RLF prediction.

Further, the configuration information may include various types of information.

For example, the configuration information may include indication information or configuration parameters for a preconfigured prediction model used by the UE for RLF prediction. Alternatively, the configuration information may include threshold information. For example, the threshold may be a value for determining whether an RLF is present when the output of the AI/ML-based RLF prediction is a radio quality measurement value.

Alternatively, the configuration information may further include information necessary for the UE to transmit the RLF prediction report.

The method for controlling radio link failure (RLF) of the UE by the base station may include receiving an RLF prediction report transmitted based on an RLF output result generated by the UE using a preconfigured prediction model that receives signal measurement results obtained from the serving cell according to the configuration information (S1010).

According to an embodiment, the UE may perform signal measurement on a downlink signal of a serving cell based on the configuration information. The signal to be measured may be a downlink reference signal. For example, the UE may measure the signal of the synchronization signal block (SSB). Alternatively, the UE may perform signal measurement on the CSI-RS.

The UE may store measurements and measurement records. As described above, the UE performs the measurement operation based on at least one of the measurement period, the time period, and measurement count information indicated by the configuration information. Whether the measurement target signal of the UE is an SSB or a CSI-RS and resource information about each signal may be included in the configuration information.

For example, the UE performs a measurement operation on the indicated downlink signal in a predetermined time duration. The measurement result may be at least one of RSRP, RSRQ, and SINR.

The UE may measure the signal of the serving cell and input the measurement result into the preconfigured prediction model. The preconfigured prediction model is an artificial intelligence model, e.g., an AI/ML model. The artificial intelligence model may be indicated by the above-described configuration information or may be pre-configured in the UE. Alternatively, the artificial intelligence model may be configured in the UE by transferring the parameters or the like from the base station.

The input to the artificial intelligence model is the signal measurement result, and at least one value of RSRP, RSRQ, and SINR may be input. The artificial intelligence model may be trained in advance. The training data may be used to predict RLF occurrence at a preset time according to the signal measurement result. The preconfigured prediction model may output the RLF output result when the above-described value is input.

According to an embodiment, the RLF output result may be a prediction SINR value. When the UE inputs the signal measurement result into the preconfigured prediction model, the prediction SINR value may be output. The prediction SINR value may be a result of predicting an SINR value corresponding to a signal measurement result in the corresponding serving cell at a future time. Thus, the prediction SINR value is a predicted SINR for a specific time in the future. Accordingly, a plurality of prediction SINR values may be output for respective future time points.

The UE may derive a predicted time of occurrence of the RLF in the serving cell based on the prediction SINR value. In other words, the UE may determine that the occurrence of the RLF is predicted when the SINR value is lower than the threshold at a specific time based on the output time-specific prediction SINR value. Accordingly, the UE may further derive not only the RLF occurrence prediction but also the RLF occurrence prediction time.

According to another embodiment, the RLF output result may be an RLF occurrence probability or RLF occurrence prediction information after a preset time. For example, the RLF occurrence probability is a value representing whether an RLF is to occur at a predetermined future time as a probability preset between 0 and 100%. Further, the RLF occurrence prediction information may be information indicating the possibility of RLF occurrence. For example, the RLF occurrence prediction information may be expressed as 0 or 1, where 1 indicates that the occurrence of RLF is predicted, and 0 indicates that the occurrence of RLF is not predicted. Of course, it may be set oppositely.

Meanwhile, when the RLF output result is output, the UE may predict the occurrence of the RLF by comparing it with the threshold included in the configuration information. For example, when the RLF output result is the prediction SINR value, the UE may predict the occurrence of the RLF by comparing the prediction SINR with the threshold. If the prediction SINR value is less than the threshold, it may be determined that the occurrence of RLF is predicted at the prediction time associated with the corresponding value. Similarly, when the RLF output result is the RLF occurrence probability, the UE may predict the RLF occurrence by comparing the probability value and the threshold.

Alternatively, when the RLF output result is RLF occurrence probability or RLF occurrence prediction information, the UE may predict RLF occurrence based on the corresponding value without comparison with the threshold. In particular, in the case of RLF occurrence prediction information, a separate threshold comparison operation is unnecessary because it directly predicts and outputs whether it occurs in the prediction model as 0 or 1.

Meanwhile, the UE may transmit the RLF prediction report to the base station based on the result of comparison between the RLF output result and the threshold. The base station receives the RLF prediction report. For example, the base station may receive the RLF prediction report transmitted by the UE when an RLF occurrence is predicted. Alternatively, even when the RLF is not predicted, the base station may receive the RLF prediction report transmitted by the UE when a preset condition is met. Alternatively, the base station may receive the RLF prediction report transmitted by the UE when the RLF output result of the prediction model is output regardless of the RLF occurrence prediction.

The RLF prediction report may include at least one of RLF declaration information, RLF occurrence time or time information, and RLF prediction result. The RLF declaration information may refer to indication information that informs the base station that the RLF is predicted to occur.

Through the prediction operations, it is possible to predict the occurrence of an RLF, thereby preventing issues associated with sudden RLF occurrences and preparing for service interruption situations beforehand.

The operations related to the above-described RLF occurrence prediction are described below in more detail with reference to the drawings. Each of the embodiments described below may be performed individually or in any combination with the operations of the UE/base station described above.

The present disclosure provides a procedure in which a network including a UE or a base station equipped with AI/ML functions preemptively determines RLF based on an AI/ML algorithm to recover the radio link between the UE and the network.

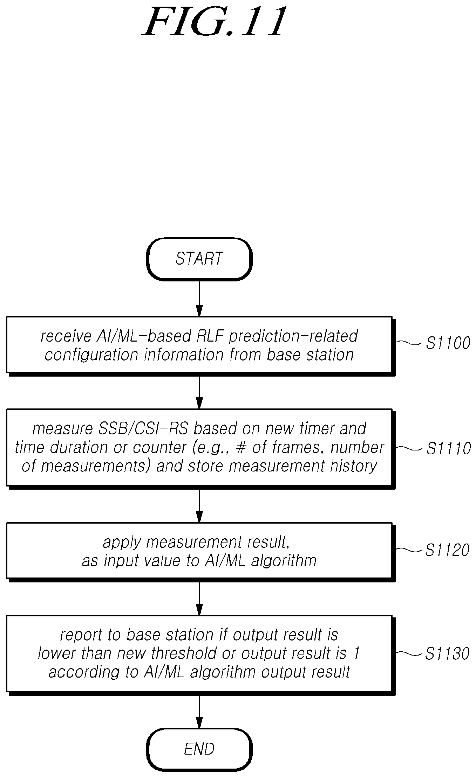

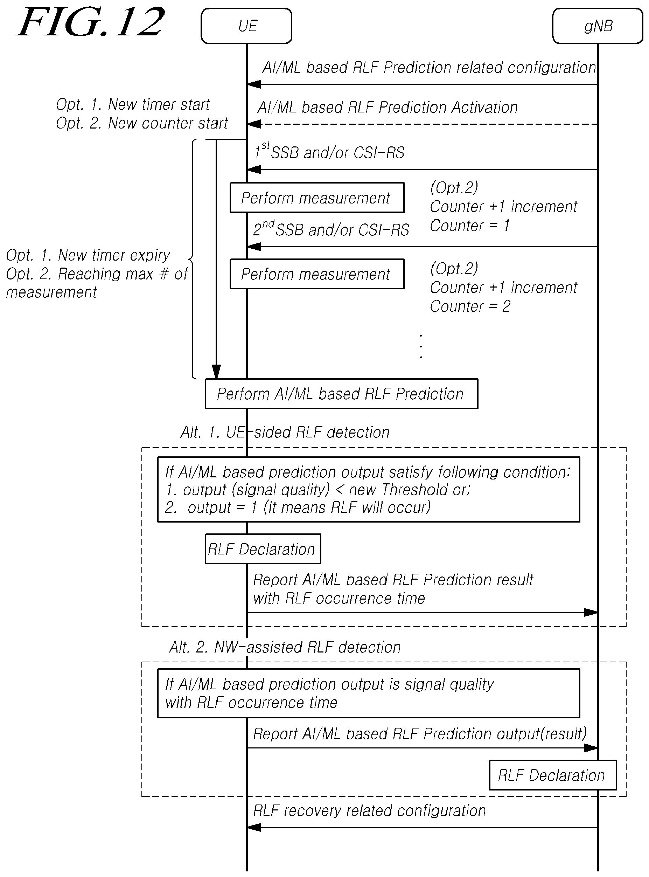

FIG. 11 is a flowchart illustrating an RLF prediction operation according to an embodiment. FIG. 12 is a signal diagram illustrating an RLF prediction operation according to an embodiment.

Referring to FIGS. 11 and 12, the UE obtains configuration information for AI/ML-based RLF prediction from the base station (S1100). The configuration information may include at least one of a new timer, counter, threshold, reporting triggering condition for the UE to transmit RLF prediction results to the base station based on AI/ML, and reporting content requirements.
- AI/ML based RLF Prediction related configuration
   ▪ AI/ML based RLF Prediction model
      ◆ Algorithm model(s) for AI/ML-based RLF prediction, or indication information indicating the model or model-related parameters
   ▪ New Timer: Time duration for measuring RSRP/RSRQ/SINR of SSB/CSI-RS for AI/ML-based RLF prediction
      ◆ Performs the signal measurement only during the timer or time duration and stores the measurement results.
      ◆ The quality measurement value(s) of the signal and/or the number of measurement values and/or the location information about the UE and/or the current time information may be used as inputs to the AI/ML-based RLF prediction algorithm.
   ▪ New Counter: Number of RSRP/RSRQ/SINR measurements of SSB/CSI-RS for AI/ML-based RLF prediction and/or number of frames/subframes/slots received and measured by the UE
      ◆ Performs the signal measurement until the counter reaches the maximum value and stores the measurement results.
      ◆ The quality measurement value(s) of the signal and/or the number of measurement values and/or the location information about the UE and/or the current time information may be used as inputs to the AI/ML-based RLF prediction algorithm.
   ▪ New Threshold (New RLF prediction report triggering condition): A threshold for determining whether there is an RLF when the output of AI/ML-based RLF prediction is a wireless quality measurement value
   ▪ New RLF prediction result report: Information that should be reported to the base station based on AI/ML-based prediction results
      ◆ The report message may convey, to the base station, information indicating that an RLF is to occur, in the form of the '1' bit when the UE performs an RLF declaration, and/or may include, e.g., the final measurement result value (ex. RSRP/RSRQ/SINR) according to AI/ML-based prediction and/or information about the time when the RLF is to occur and/or the number of signals or measured time durations during which the UE measured SSB/CSI-RS and/or the measured time duration.
         - The number of signals or measured time durations during which the UE measured SSB/CSI-RS may be used to verify the reliability of AI/ML-based RLF prediction results, and the new timer or new counter information may be modified by comparing it with the actual occurrence and/or RLF occurrence time.

The UE may measure and store, e.g., RSRP/RSRQ/SINR of SSB and/or CSI-RS signals according to *rsType* based on the configuration information obtained from the base station (S1110). The UE performs AI/ML-based RLF prediction based on the measurement signal results. The UE applies the measurement results as input values to the AI/ML algorithm (S1120). The AI/ML-based RLF prediction result value may be set in at least one of the following forms..
- AI/ML based RLF Prediction output
   ▪ Signal quality: RSRP/RSRQ/SINR
   ▪ RLF occurrence: '1' or '0' ('1' means that RLF will occur, '0' means it will not occur)
   ▪ RLF occurrence time: Information about the time when the RLF will occur in the future
   ▪ rsType used for RLF prediction and measurement time duration or number of measurements per rsType

The UE may operate as follows differently depending on the AI/ML-based RLF prediction output and UE-sided or NW-assisted mode.

In the case of UE-sided RLF prediction detection, the UE declares RLF if the configuration information (e.g., threshold) conditions previously obtained are met based on the prediction result. Alternatively, when the RLF prediction output indicates the RLF occurrence in bit form, the UE declares an RFL. After the UE declares RLF on its own, it may report, to the base station, the time/time information about the RLF occurrence along with the RLF occurrence (S1130). In this case, the prediction report triggering event may be configured to be reported when it is met based on the comparison with the AI/ML-based measurement result, or periodically.

In NW-assisted mode, the UE may report the prediction result value to the base station. In this case, the prediction report triggering event may be configured to be reported when it is met based on the comparison with the AI/ML-based measurement result, or periodically. The base station or network that receives the information declares an RLF using core information such as AMF/UPF.

In the UE-sided/NW-sided mode, the prediction report (report AI/ML based RLF prediction) message may include information such as radio quality measurement values such as RSRP/RSRQ/SINR per rsType, RLF occurrence time and UE location information, measurement time duration per rsType used for RLF prediction, or number of measurements.

The base station may provide the UE with configuration information for RLF recovery based on the RLF prediction result value received from the UE. It may include configuration information related to RRC reconfiguration or RRC connection re-establishment. Further, the base station may measure the reliability of the AI/ML model by comparing the AI/ML prediction result values, such as the measurement time duration or the number of measurements per rsType, with the actual occurrence of RLF. Accordingly, the base station may additionally request the UE to change the AI/ML model.

According to the embodiments, the UE may detect the occurrence of the RLF in advance, notify the base station, and obtain information necessary for radio link recovery from the base station in advance through the AI/ML-based RLF prediction operation. Based on this, the UE may overcome the limitations of the typical RLF/RLM procedure to maintain a seamless communication service.

Further, the present embodiment may greatly help enhance handover robustness and interruption time reduction when applying a method of proactively predicting radio link failure and handover based on an AI/ML algorithm. For example, the present embodiment may avoid unintended events such as radio link failure (RLF) or short-stay handovers by predicting further deterioration of beam(s) or cell(s) environments and measurement values through temporal prediction.

Hereinafter, the UE and the base station performing the above-described operations will be briefly described once again from the viewpoint of configuration.

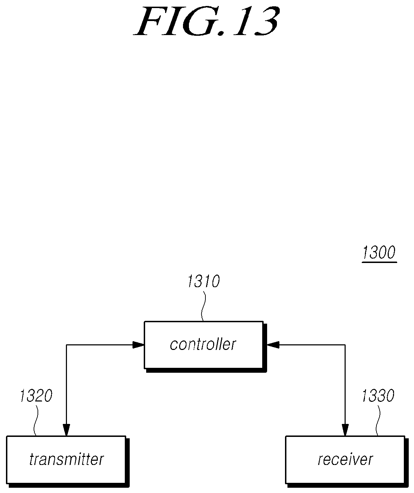

FIG. 13 is a block diagram illustrating a UE according to an embodiment.

Referring to FIG. 13, a UE 1300 predicting a radio link failure (RLF) may include a receiver 1330 receiving configuration information for RLF prediction from a base station, and a controller 1310 performing signal measurement of a serving cell based on the configuration information and predicting an RLF occurrence using an RLF output result generated from a preconfigured prediction model by inputting a signal measurement result to the prediction model.

According to an embodiment, the receiver 1330 may receive configuration information including parameters or information for RLF prediction from the base station through higher layer signaling. The higher layer signaling may mean an RRC message.

According to an embodiment, the configuration information may include at least one of time duration information, measurement count information, and measurement period information for signal measurement of a serving cell. The configuration information may have the same meaning as establishment information.

According to an embodiment, the time duration information for signal measurement includes information about the time duration when the UE should measure the downlink signal for RLF prediction. The corresponding time duration information may be included as timer information. Alternatively, the corresponding time duration information may be indicated as a start time and a duration information. According to another embodiment, the measurement count information may include information about the minimum, specific, or maximum number of times that the UE should measure the downlink signal for RLF prediction. Alternatively, the measurement count information may indicate the number of frames/subframes/slots that the UE should receive or measure. The controller 1310 may repeat the measurement operation until the corresponding number of measurements reaches a maximum value. According to further another embodiment, the measurement period information may include information about the time period when the UE measures the downlink signal for RLF prediction.

Further, the configuration information may include various types of information.

According to an embodiment, the configuration information may include indication information or configuration parameters for a preconfigured prediction model used by the UE for RLF prediction. Alternatively, the configuration information may include threshold information. For example, the threshold may be a value for determining whether an RLF is present when the output of the AI/ML-based RLF prediction is a radio quality measurement value.

According to another embodiment, the configuration information may further include information necessary for the UE to transmit the RLF prediction report.

The controller 1310 may measure the signal of the serving cell based on the configuration information. The signal to be measured may be a downlink reference signal. For example, the controller 1310 may measure the signal of the synchronization signal block (SSB). Alternatively, the controller 1310 may perform signal measurement of the CSI-RS.

The controller 1310 may store measurements and measurement records. As described above, the controller 1310 performs the measurement operation based on at least one of the measurement period, the time duration, and measurement count information indicated by the configuration information. Whether the measurement target signal of the UE is an SSB or a CSI-RS and resource information about each signal may be included in the configuration information. For example, the controller 1310 performs a measurement operation on the indicated downlink signal in a predetermined time duration. The measurement result may be at least one of RSRP, RSRQ, and SINR.

The controller 1310 may measure the signal of the serving cell and input the measurement result into the preconfigured prediction model. The preconfigured prediction model is an AI/ML-based model. The artificial intelligence model may be indicated by the above-described configuration information or may be pre-configured in the UE. Alternatively, the artificial intelligence model may be configured in the UE by transferring the parameters or the like by the base station.

The input to the artificial intelligence model is the signal measurement result, and at least one value of RSRP, RSRQ, and SINR may be input. The artificial intelligence model may be pretrained. The training data may be used for predicting RLF occurrence at a preset time according to the signal measurement result. The preconfigured prediction model may output the RLF output result when the above-described value is input.

According to an embodiment, the RLF output result may be a predicted SINR value. When the UE inputs the signal measurement result into the preconfigured prediction model, the prediction SINR value may be output. The predicted SINR value may be a result of predicting an SINR value which is a signal measurement result in the corresponding serving cell at a future time. Thus, the predicted SINR value is the prediction SINR value at a specific time in the future. Accordingly, a plurality of predicted SINR values may be output at each future time.

The controller 1310 may derive a predicted time of occurrence of the RLF in the serving cell based on the predicted SINR value. In other words, the controller 1310 may determine that the occurrence of the RLF is predicted when the SINR value is lower than the threshold at a specific time based on the output time-specific predicted SINR value. Accordingly, the controller 1310 may further derive not only the RLF occurrence prediction but also the RLF occurrence prediction time.

According to another embodiment, the RLF output result may be an RLF occurrence probability or RLF occurrence prediction information after a preset time. For example, the RLF occurrence probability is a value representing whether an RLF is to occur at a predetermined future time as a probability predefined between 0 and 100%. Further, the RLF occurrence prediction information may be information indicating the possibility of RLF occurrence. For example, the RLF occurrence prediction information appears as 0 or 1, where 1 indicates that the occurrence of RLF is predicted, and 0 indicates that the occurrence of RLF is not predicted. Of course, it may be set oppositely.

Meanwhile, when the RLF output result is output, the controller 1310 may predict the occurrence of the RLF by comparing it with the threshold included in the configuration information. For example, when the RLF output result is the prediction SINR value, the UE (e.g., controller 130) may predict the occurrence of the RLF by comparing the prediction SINR with the threshold. If the prediction SINR value is less than the threshold, it may be determined that the occurrence of RLF is predicted at the prediction time of the corresponding prediction SINR value. Similarly, when the RLF output result is the RLF occurrence probability, the controller 1310 may predict the RLF occurrence by comparing the probability value and the threshold.

Alternatively, when the RLF output result is RLF occurrence probability or RLF occurrence prediction information, the controller 1310 may predict RLF occurrence based on the corresponding value without performing a threshold comparison. In particular, in the case of RLF occurrence prediction information, a separate threshold comparison operation is unnecessary because it directly predicts and outputs whether it occurs in the prediction model as 0 or 1.

Meanwhile, the transmitter 1320 may transmit the RLF prediction report to the base station based on the result of comparison between the RLF output result and the threshold. For example, when the occurrence of the RLF is predicted, the transmitter 1320 may transmit the RLF prediction report to the base station. Alternatively, even when the occurrence of the RLF is not predicted, the transmitter 1320 may transmit the RLF prediction report to the base station if a preset condition is met. Alternatively, the transmitter 1320 may transmit the RLF prediction report to the base station when the RLF output result of the prediction model is output regardless of the RLF occurrence prediction.

The RLF prediction report may include at least one of RLF declaration information, RLF occurrence time or time information, and RLF prediction result. The RLF declaration information may refer to an indicator notifying the base station that the RLF is predicted.

Besides, the controller 1310 controls the overall operation of the UE 1300 according to the AI/ML-based RLF prediction procedure described above.

The transmitter 1320 and the receiver 1330 are used to transmit or receive signals or messages or data necessary for performing the above-described embodiments, with the base station.

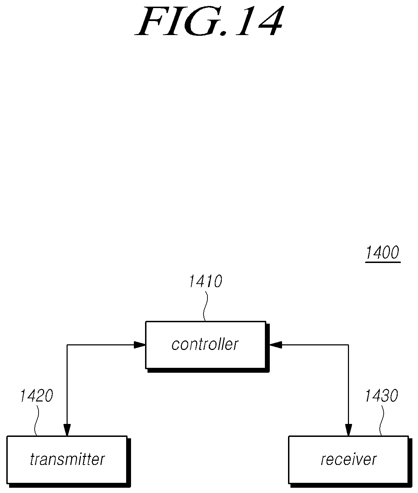

FIG. 14 is a block diagram illustrating a base station according to an embodiment.

Referring to FIG. 14, a base station 1400 controlling radio link failure (RLF) prediction of a UE may include a transmitter 1420 transmitting configuration information for RLF prediction of the UE to the UE, and a receiver 1430 receiving an RLF prediction report transmitted based on an RLF output result output from a preconfigured prediction model by measuring a signal of a serving cell using the configuration information by the UE and inputting a signal measurement result to the prediction model.

The configuration information may be transmitted to the UE through higher layer signaling. The higher layer signaling may be an RRC message.

According to an embodiment, the configuration information may include at least one of time duration information, measurement count information, and measurement period information for signal measurement of a serving cell.

According to an embodiment, the time duration information for signal measurement includes information about the time duration when the UE should measure the downlink signal for RLF prediction. The corresponding time duration information may be included as timer information. Alternatively, the corresponding time duration information may be indicated as start time and duration information. According to another embodiment, the measurement count information may include information about the minimum, specific, or maximum number of times that the UE should measure the downlink signal for RLF prediction. Alternatively, the measurement count information may indicate the number of frames/subframes/slots that the UE should receive or measure. The UE may repeat the measurement operation until the corresponding number of measurements reaches a maximum value. According to further another embodiment, the measurement period information may include information about the time duration when the UE measures the downlink signal for RLF prediction.

Further, the configuration information may include various types of information. For example, the configuration information may include indication information or configuration parameters for a preconfigured prediction model used by the UE for RLF prediction. Alternatively, the configuration information may include threshold information. For example, the threshold may be a value for determining whether an RLF is present when the output of the AI/ML-based RLF prediction is a radio quality measurement value. Alternatively, the configuration information may further include information necessary for the UE to transmit the RLF prediction report.

The UE may perform signal measurement on a downlink signal of a serving cell based on the configuration information. The signal to be measured may be a downlink reference signal. For example, the UE may measure the signal of the synchronization signal block (SSB). Alternatively, the UE may perform signal measurement of the CSI-RS.

The UE may store measurements and measurement records. As described above, the UE performs the measurement operation based on at least one of the measurement period, the time period, and measurement count information indicated by the configuration information. Whether the measurement target signal of the UE is an SSB or a CSI-RS and resource information about each signal may be included in the configuration information.

The UE may measure the signal of the serving cell and input the measurement result into the preconfigured prediction model. The preconfigured prediction model is an artificial intelligence model, which is an AI/ML model. The artificial intelligence model may be indicated by the above-described configuration information or may be pre-configured in the UE. Alternatively, the artificial intelligence model may be configured in the UE by transferring the parameters or the like by the base station.

The input to the artificial intelligence model is the signal measurement result, and at least one value of RSRP, RSRQ, and SINR may be input. The artificial intelligence model may be pretrained. The training data may be associated with RLF occurrence at a preset time according to the signal measurement result. The preconfigured prediction model may output the RLF output result when the above-described value is input.

For example, the RLF output result may be a prediction SINR value. When the UE inputs the signal measurement result into the preconfigured prediction model, the prediction SINR value may be output. The prediction SINR value may be a result of predicting an SINR value which is a signal measurement result in the corresponding serving cell at a future time. Thus, the prediction SINR value is the prediction SINR value at a specific future moment. Accordingly, a plurality of prediction SINR values may be output at each future time.

The UE may derive a predicted time of occurrence of the RLF in the serving cell based on the prediction SINR value. In other words, the UE may determine that the occurrence of the RLF is predicted when the SINR value is lower than the threshold at a future time point based on the output time-specific prediction SINR value. Accordingly, the UE may further derive not only the RLF occurrence prediction but also the RLF occurrence prediction time.

As another example, the RLF output result may be an RLF occurrence probability or RLF occurrence prediction information after a configured time. For example, the RLF occurrence probability is a value representing whether an RLF is to occur at a predetermined future time as a probability preset between 0 and 100%. Further, the RLF occurrence prediction information may be information indicating the possibility of RLF occurrence. For example, the RLF occurrence prediction information appears as 0 or 1, where 1 indicates that the occurrence of RLF is predicted, and 0 indicates that the occurrence of RLF is not predicted. Of course, it may be set oppositely.

Meanwhile, when the RLF output result is output, the UE may predict the occurrence of the RLF by comparing it with the threshold included in the configuration information. For example, when the RLF output result is the prediction SINR value, the UE may predict the occurrence of the RLF by comparing the prediction SINR with the threshold. If the prediction SINR value is less than the threshold, it may be determined that the occurrence of RLF is predicted at the prediction time of the corresponding prediction SINR value. Similarly, when the RLF output result is the RLF occurrence probability, the UE may predict the RLF occurrence by comparing the RLF occurrence probability and the threshold.

Alternatively, when the RLF output result is RLF occurrence probability or RLF occurrence prediction information, the UE may predict RLF occurrence based on the corresponding value even without requiring comparison with the threshold. In particular, in the case of RLF occurrence prediction information, a separate threshold comparison operation is unnecessary because it directly predicts and outputs whether it occurs in the prediction model as 0 or 1.

Meanwhile, the UE may transmit the RLF prediction report to the base station based on the result of comparison between the RLF output result and the threshold. The receiver 1430 receives the RLF prediction report. For example, the receiver 1430 may receive the RLF prediction report transmitted by the UE when an RLF occurrence is predicted. Alternatively, even when the occurrence of the RLF is not predicted, the receiver 1430 may receive the RLF prediction report transmitted by the UE if a preset condition is met. Alternatively, the receiver 1430 may receive the RLF prediction report transmitted by the UE when the RLF output result of the prediction model is output regardless of the RLF occurrence prediction.

The RLF prediction report may include at least one of RLF declaration information, RLF occurrence time or time information, and RLF prediction result. The RLF declaration information may refer to an indication indicating to the base station that the RLF is predicted to occur.

Besides, the controller 1410 controls the overall operation of the base station 1400 according to the RLF prediction operation for the UE necessary to perform the above-described embodiments.

The transmitter 1420 and the receiver 1430 are used to transmit or receive signals and/or messages or data necessary for performing the above-described embodiments, with the UE.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the disclosure shall be construed on the basis of the accompanying claims in such a manner that all of the technical ideas included within the scope equivalent to the claims belong to the disclosure.

## Claims

1. A method for predicting a radio link failure (RLF) by a user equipment (UE), the method comprising:
receiving configuration information for RLF prediction from a base station;
performing signal measurement of a serving cell based on the configuration information; and
predicting an RLF occurrence using an RLF output result generated from a preconfigured prediction model by inputting a signal measurement result to the prediction model.

2. The method of claim 1, wherein the configuration information includes at least one of time duration information, measurement count information, and measurement period information for signal measurement of the serving cell.

3. The method of claim 1, wherein the RLF output result is a prediction signal-to-interference plus noise ratio (SINR) value.

4. The method of claim 3, wherein the predicting the RLF occurrence comprises:
deriving an RLF occurrence prediction time in the serving cell based on the predicted SINR.

5. The method of claim 1, wherein the RLF output result is at least one of an RLF occurrence probability and RLF occurrence prediction information after a preset time.

6. The method of claim 1, wherein the predicting the RLF occurrence comprises:
predicting the RLF occurrence by comparing the RLF output result with a threshold included in the configuration information.

7. The method of claim 6, wherein the predicting the RLF occurrence comprises:
controlling to transmit an RLF prediction report to the base station based on a result of the comparison between the RLF output result and the threshold.

8. A method for controlling radio link failure (RLF) prediction of a user equipment (UE) by a base station, the method comprising:
transmitting configuration information for RLF prediction to the UE; and
receiving an RLF prediction report transmitted according to an RLF output result generated from a preconfigured prediction model by measuring a signal of a serving cell using the configuration information by the UE and inputting a signal measurement result to the prediction model.

9. The method of claim 8, wherein the configuration information includes at least one of time duration information, measurement count information, and measurement period information for signal measurement of the serving cell.

10. The method of claim 8, wherein the RLF prediction report includes at least one of the RLF output result information, RLF occurrence probability information, RLF occurrence prediction information, and RLF occurrence time information.

11. A user equipment (UE) predicting a radio link failure (RLF), comprising:
a receiver configured to receive configuration information for RLF prediction from a base station; and
a controller configured to perform signal measurement of a serving cell based on the configuration information and predicting an RLF occurrence using an RLF output result generated from a preconfigured prediction model by inputting a signal measurement result to the prediction model.

12. The UE of claim 11, wherein the configuration information includes at least one of time duration information, measurement count information, and measurement period information for signal measurement of the serving cell.

13. The UE of claim 11, wherein the RLF output result is a prediction signal-to-interference plus noise ratio (SINR) value.

14. The UE of claim 13, wherein the controller derives an RLF occurrence prediction time in the serving cell based on the prediction SINR.

15. The UE of claim 11, wherein the RLF output result is one of an RLF occurrence probability and RLF occurrence prediction information after a preset time.
